# EUROPÄISCHE PATENTSCHRIFT

(11) **EP 4 109 055 B1**
(45) Veröffentlichungstag und Bekanntmachung des Hinweises auf die Patenterteilung: **20.03.2024**
(21) Anmeldenummer: 22176307.1
(22) Anmeldetag: 31.05.2022
(51) Int. Cl.: G01F 1/667, G01F 15/18, G01F 1/66, G01F 15/14

(54) **DURCHFLUSSMENGENMESSER**
FLOW RATE DETECTOR
DÉBITMÈTRE

(30) Priorität: 08.06.2021 DE 102021114657
(43) Veröffentlichungstag der Anmeldung: 28.12.2022
(73) Patentinhaber: Engelmann Sensor GmbH, 69168 Wiesloch-Baiertal (DE)
(72) Erfinder: SCHEIB, Oliver, 76889 Schweigen-Rechtenbank (DE); WEGH, Niels, 76676 Graben-Neudorf (DE)
(74) Vertreter: Durm Patentanwälte PartG mbB

(56) Entgegenhaltungen:
- EP-B1- 1 227 303
- DE-A1- 19 533 814
- DE-A1-102020 102 755
- DE-B3-102005 062 628
- DE-B4- 10 235 034
- DE-B4-102010 053 261

## Beschreibung

Die Erfindung betrifft einen Durchflussmengenmesser zur Bestimmung der Menge einer Flüssigkeit, die durch eine Leitung fließt.

Der Durchflussmengenmesser umfasst ein Anschlussstück mit einem Einlassstutzen und einem Auslassstutzen, welche mit der Leitung verbindbar sind. Der Durchflussmengenmesser umfasst ferner eine Messkapsel mit einem runden Messkapselgehäuse aus Metall und einem darin ausgebildeten Messkanal. Dabei ist der Einlass des Messkanals mit dem Einlassstutzen und der Auslass des Messkanals mit dem Auslassstutzen verbunden, sodass das zu messende Flüssigkeitsvolumen vollständig durch den Messkanal strömt. Eine in dem Messkanal ausgebildete Ultraschall-Messstrecke umfasst zwei Ultraschallwandler, welche am Anfang und am Ende des Messkanals angeordnet sind und Ultraschallsignale in die Ultraschall-Messstrecke senden und/oder empfangen. Durch eine Laufzeitmessung der Ultraschall-Signale kann das durch den Messkanal strömende Volumen präzise gemessen werden.

Derartige Durchflussmengenmesser werden in Wärmezählern verwendet, um den Verbrauch von Wärme in einer Heizungsanlage zu erfassen. Im Vorlauf und im Rücklauf der Heizungsanlage wird jeweils die Temperatur des Heizungswassers gemessen. Aus der Temperaturdifferenz und der gemessenen Durchflussmenge lässt sich dann die verbrauchte Wärmemenge berechnen.

Die Rohrleitungen, in denen ein solcher Ultraschall-Durchflussmengenmesser zum Einsatz kommt, bestehen üblicherweise aus Metall. Das Anschlussstück des Durchflussmessers besteht deshalb in der Regel aus Metall, vorzugsweise Messing. Auch das Gehäuse der Messkapsel besteht vorzugsweise aus Metall, insbesondere Messing. Metallische Gehäuse haben allerdings die Eigenschaft, Ultraschallsignale zu reflektieren, was eine präzise Messung erschwert.

EP 3 677 877 A1 beschreibt einen Ultraschall-Durchflussmengenmesser mit einem Messrohr aus Ultraschall absorbierendem Kunststoff. Das von der Flüssigkeit durchströmte Messrohr sitzt in einem Metallgehäus. Durch die Verwendung eines Messrohrs aus Kunststoff werden unerwünschte Reflexionen an den Wänden des Metallgehäuses und eine unkontrollierte Ausbreitung eingekoppelter Schwingungen als Körperschall minimiert. Auf der Innenwandung des Messrohrs sind Umlenkspiegel in Form von flachen ebenen Metallplättchen montiert. Die Befestigung der Metallplättchen in dem Kunststoff-Messrohr erfordert erheblichen konstruktiven Aufwand; beispielsweise werden die als Umlenkspiegel dienenden Metallplättchen im Spritzgussprozess in das Messrohr mit eingespritzt. Diese Lösung ist konstruktiv aufwendig und teuer in der Herstellung.

DE 195 33 814 A1 beschreibt einen Durchflussmengenmesser.

Der Erfindung liegt das technische Problem zugrunde, einen Durchflussmengenmesser mit einem runden Messkapselgehäuse aus Metall und einer Ultraschall-Messstrecke so auszubilden, dass die Ultraschallsignale durch den Messkanal geleitet werden, ohne dass es zu unerwünschten Reflexionen an den Wänden des Messkapselgehäuses und zu unkontrollierter Ausbreitung eingekoppelter Schwingungen kommt.

Die Erfindung beruht auf der Idee, die grundsätzliche Eigenschaft des metallischen Gehäuses, Ultraschallsignale zu reflektieren, für die kontrollierte Spiegelung der Ultraschallsignale zu nutzen.

Bei der Lösung der gestellten Aufgabe wird ausgegangen von einem Durchflussmengenmesser gemäß dem Oberbegriff des Patentanspruchs 1. Gelöst wird die Aufgabe gemäß dem kennzeichnenden Teil des Anspruchs dadurch, dass in dem Messkapselgehäuse aus Metall ein Messkammereinsatz aus einem Kunststoff, der Ultraschall absorbiert, koaxial angeordnet ist, dass der Messkanal in dem Messkammereinsatz ausgebildet ist, dass die Außenwandung des Messkammereinsatzes radiale Öffnungen hat und dass an der Innenwandung des Messkapselgehäuses ebene Spiegelflächen ausgebildet sind, wobei diese Spiegelflächen die radialen Öffnungen des Messkammereinsatzes schließen. Die Spiegelflächen sind vorzugsweise einstückig mit dem Messkapselgehäuse ausgebildet.

Erfindungsgemäß übernehmen das Messkapselgehäuse und der Messkammereinsatz jeweils die technischen Funktionen, für welche sie aufgrund ihres Materials geeignet sind: Während der Messkammereinsatz aus Kunststoff den Messkanal, durch den die zu messende Flüssigkeit strömt, begrenzt, bilden die hinter den radialen Öffnungen des Messkammereinsatzes liegenden Spiegelflächen des Messkapselgehäuses aus Metall die Umlenkspiegel zum Reflektieren der Ultraschallsignale von bzw. zu den Ultraschallwandlern. Dabei ergänzen sich die verwendeten Materialien reziprok: Während der Kunststoff, aus dem der Messkammereinsatz besteht, Ultraschallwellen so gut wie nicht reflektiert, sondern absorbiert, werden die den Messkammereinsatz durch die radialen Öffnungen verlassenden Ultraschallsignale von den hinter den "Fenstern" liegenden Metallflächen in den Messkammereinsatz zurückgespiegelt. Der große Vorteil dabei ist, dass in den Messkammereinsatz aus Kunststoff nicht nachträglich Umlenkspiegel, beispielsweise in Form von Metallplättchen, eingebaut werden müssen.

Der in dem runden Messkapselgehäuse ausgebildete Messkanal folgt vorzugsweise der Form eines Kreisrings. Ein abgeschlossener Sektor dieses Kreisrings kann als Einbauraum für die Ultraschallwandler dienen. Das Messkapselgehäuse selbst hat vorzugsweise die Form eines flachen Zylinders mit runder Wandung und kreisförmiger ebener Oberseite.

Damit die Ultraschallsignale den kreisabschnittförmigen Messkanal vollständig durchlaufen, bedarf es der Anordnung von drei Spiegelflächen, die über den Umfang des Messkapselgehäuses verteilt angeordnet sind. Der Messkapseleinsatz muss dann drei korrespondierend angeordnete Öffnungen haben, durch welche die Ultraschallsignale auf die dahinter liegenden, an der Innenwandung des Messkapselgehäuses ausgebildeten Spiegelfächen unter einem schrägen Winkel treffen, um unter dem gleichen Winkel, auf der anderen Seite der Winkelhalbierenden, wieder zurück in den Messkammereinsatz und damit in den Messkanal hinein gestrahlt zu werden.

Bevorzugt ist das Messkapselgehäuse auf das Anschlussstück aufschraubbar. Dadurch wird es möglich, dass das Messkapselgehäuse zu Wartungszwecken aufschraubbar ist, um den Messkammereinsatz herauszunehmen. Eine Reinigung und insbesondere die Entfernung von Ablagerungen auf den Spiegelflächen werden dadurch sehr leicht möglich, ebenso ein Austausch eines defekten Ultraschallwandlers.

Das Messkapselgehäuse und das Anschlussstück bestehen vorzugsweise beide aus Messing. Dieses Metall lässt sich sehr gut bearbeiten und ist korrosionsfest.

Ein Ausführungsbeispiel der Erfindung wird nachstehend unter Bezugnahme auf die beigefügten Abbildungen näher beschrieben. Es zeigen:
Figur 1 einen Durchflussmengenmesser in einer perspektivischen Ansicht, mit aufgeschnittener Messkapsel;
Figur 2 den Durchflussmengenmesser von Fig. 1, in einem Horizontalschnitt.

Der dargestellte Durchflussmengenmesser umfasst ein Anschlussstück 10, dessen zentraler Teil 11 einen runden Querschnitt hat. Ein Einlassstutzen 12 und ein Auslassstutzen 13 sind rechts bzw. links angeformt. Das Anschlussstück 10 ist einstückig aus Messing gegossen. Überwurfmuttern 14, 15 dienen der festen flüssigkeitsdichten Verbindung mit einer (nicht dargestellten) Leitung, die von Heizungswasser in Richtung des Pfeils 16 durchströmt wird.

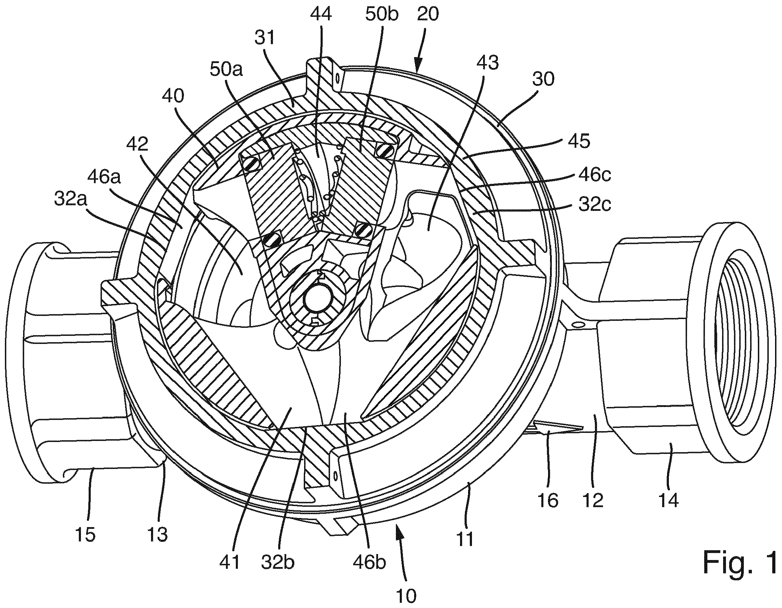

Auf das Anschlussstück 10 ist eine Messkapsel 20 aufgeschraubt. Die Messkapsel 20 hat ein Messkapselgehäuse 30, welches im Wesentlichen die Form eines flachen Zylinders mit ebener Oberseite hat. Das Messkapselgehäuse 30 ist ebenfalls aus Messing hergestellt. In Fig. 1 ist der obere Teil des Messkapselgehäuses 30 abgeschnitten, sodass der Blick in das Innere frei wird.

In dem Messkapselgehäuse 30 sitzt koaxial ein Messkammereinsatz 40 aus Kunststoff. Der Messkammereinsatz 40 hat im Wesentlichen ebenfalls die Form eines flachen Zylinders, wobei der Innendurchmesser des Messkapselgehäuses 30 und der Außendurchmesser des Messkammereinsatzes 40 derart aufeinander abgestimmt sind, dass der Messkammereinsatz 40 ohne Zwischenraum koaxial in dem Messkapselgehäuse 30 sitzt. Der Messkammereinsatz 40 kann vor dem Aufschrauben des Messkapselgehäuses 30 auf das Anschlussstück 10 von unten in das Messkapselgehäuse 30 eingesetzt werden.

In dem Messkammereinsatz 40 ist ein Messkanal 41 ausgebildet, durch den das zu messende Flüssigkeitsvolumen geleitet wird.

Einlassstutzen 12 und Auslassstutzen 13 des Anschlussstücks 10 sind nicht direkt miteinander verbunden, sondern durch eine (hier nicht zu sehende) Wand voneinander getrennt. Ein Einlass 42 des Messkanals 41 steht mit dem Einlassstutzen 12 in Verbindung, während ein Auslass 43 des Messkanals 41 mit dem Auslassstutzen 13 in Verbindung steht. Somit strömt das gesamte Flüssigkeitsvolumen durch den Messkanal 41.

In einem abgeschlossenen Sektor 44 des Messkammereinsatzes 40 sind zwei Ultraschallwandler 50a, 50b angeordnet. Die in entgegengesetzte Richtungen weisenden Vorderseiten der Ultraschallwandler 50a, 50b bilden den Anfang und das Ende des Messkanals 41. Der Messkanal 41 hat im Prinzip die Form eines Kreisringabschnitts.

Die Außenwand 45 des Messkammereinsatzes 40 ist von drei radialen Öffnungen 46a, 46b, 46c durchbrochen. An der Innenwand 31 des Messkapselgehäuses 30 sind drei ebene Spiegelflächen 32a, 32b, 32c korrespondierend zu den radialen Öffnungen 46a, 46b, 46c des Messkammereinsatzes 40 so angeordnet, dass die Spiegelflächen 32a, 32b, 32c die Öffnungen 46a, 46b, 46c weitgehend flüssigkeitsdicht schließen. Die Spiegelflächen 32a, 32b, 32c sind einstückig mit dem Messkapselgehäuse 30 ausgebildet.

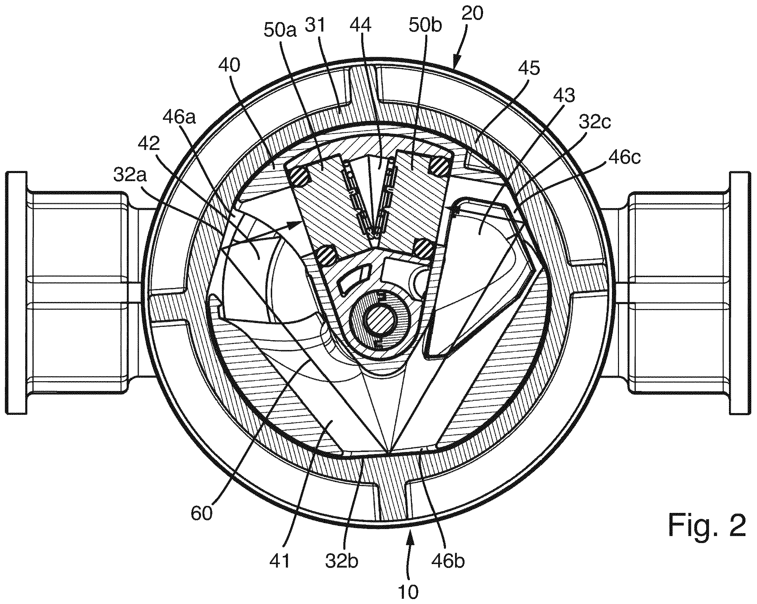

In dem Horizontalschnitt von Fig. 2 lässt sich die Ultraschall-Messstrecke 60 durch den Messkanal 41 verfolgen. Die von dem ersten Ultraschallwandler 50a ausgesendeten Ultraschallsignale verlassen den Messkammereinsatz 40 durch die erste radiale Öffnung 46a und treffen auf die dahinterliegende erste Spiegelfläche 32a des Messkapselgehäuses 30 unter einem schrägen Winkel auf. Die erste Spiegelfläche 32a reflektiert das Ultraschallsignal unter einem Ausfallswinkel, der dem Einfallswinkel entspricht, zurück in den Messkanal 41 in Richtung der zweiten Spiegelfläche 32b. Von der zweiten Spiegelfläche 32b wird das Ultraschallsignal zu der dritten Spiegelfläche 32c gespiegelt und von dieser auf den zweiten Ultraschallwandler 50b am Ende des Messkanals 41. Nach insgesamt dreimaliger Spiegelung hat das Ultraschallmesssignal den ganzen Messkanal 41 durchlaufen. Umgekehrt werden von dem zweiten Ultraschalwandler 50b ausgesendete Ultraschallsignale gegenläufig über die drei Spiegelflächen 32a, 32b, 32c auf den zweiten Ultraschallwandler 50b geleitet.

Die Laufzeit der Ultraschallsignale hängt von der Strömungsgeschwindigkeit der Flüssigkeit, welche den Messkanal 41 und die Messstrecke 60 durchströmt, ab. Aus den Laufzeitunterschieden der gegenläufigen Ultraschallsignale lässt sich das Volumen der Flüssigkeit, welche die Messkapsel 20 durchströmt, sehr genau bestimmen.

Dabei verläuft die Ultraschall-Messstrecke 60 näherungsweise parallel zu dem Messkanal 41. Da der Messkanal 41 in dem Messkammereinsatz aus einem Kunststoff, der Ultraschall gut absorbiert, ausgebildet ist, können sich kaum Reflexionen an den Wänden des Messkanals 41 ausbilden. Gleichzeitig sorgen die metallenen Spiegelflächen 32a, 32b, 32c, die an der Innenwand des Messkapselgehäuses 30 ausgebildet sind, für präzise und verlustarme Reflexionen der Ultraschallsignale in die jeweils gewünschte Richtung.

### Bezugszeichen

- 10: Anschlussstück
- 11: zentraler Teil
- 12: Einlassstutzen
- 13: Auslassstutzen
- 14: Überwurfmutter (Einlass)
- 15: Überwurfmutter (Auslass)
- 16: Pfeil

- 20: Messkapsel

- 30: Messkapselgehäuse
- 31: Innenwand
- 32a, b, c: Spiegelflächen (Innenwand)

- 40: Messkammereinsatz
- 41: Messkanal
- 42: Einlass
- 43: Auslass
- 44: Sektor
- 45: Außenwand
- 46a, b, c: Öffnungen (Außenwand)

- 50a, b: Ultraschallwandler

- 60: Ultraschall-Messstrecke

## Patentansprüche

1. Durchflussmengenmesser zur Bestimmung der Menge einer Flüssigkeit, die durch eine Leitung fließt, umfassend:
ein Anschlussstück (10) mit einem Einlassstutzen (12) und einem Auslassstutzen (13), welche mit der Leitung verbindbar sind;
eine Messkapsel (20) mit einem runden Messkapselgehäuse (30) aus Metall und einem Messkanal (41), wobei der Einlass des Messkanals mit dem Einlassstutzen und der Auslass des Messkanals mit dem Auslassstutzen verbunden ist, sodass das zu messende Flüssigkeitsvolumen durch den Messkanal strömt;
eine durch den Messkanal verlaufende Ultraschall-Messstrecke (60) mit zwei Ultraschallwandlern (50a, 50b), die am Anfang und am Ende des Messkanals angeordnet sind und Ultraschallsignale in die Ultraschall-Messstrecke senden und/oder empfangen;
entlang des Messkanals angeordnete Umlenkspiegel, die schräg zueinander geneigt sind, sodass die von dem ersten Ultraschallwandler ausgesendeten Ultraschallsignale über die Umlenkspiegel zu dem zweiten Ultraschallwandler reflektiert werden und/oder gegenläufig zurück zu dem ersten Ultraschallwandler;
**dadurch gekennzeichnet, dass**
in dem Messkapselgehäuse (30) ein Messkammereinsatz (40) aus einem Kunststoff, der Ultraschall absorbiert, koaxial angeordnet ist;
der Messkanal (41) in dem Messkammereinsatz (40) ausgebildet ist;
die Außenwand (45) des Messkammereinsatzes (40) radiale Öffnungen (46a, 46b, 46c) hat;
an der Innenwand (31) des Messkapselgehäuses (30) ebene Spiegelflächen (32a, 32b, 32c) ausgebildet sind, wobei die Spiegelflächen die radialen Öffnungen des Messkammereinsatzes schließen.

2. Durchflussmengenmesser nach Anspruch 1, **dadurch gekennzeichnet, dass** die Spiegelflächen (32a, 32b, 32c) einstückig mit dem Messkapselgehäuse (30) ausgebildet sind.

3. Durchflussmengenmesser nach Anspruch 1 oder Anspruch 2, **dadurch gekennzeichnet, dass** der Messkanal (41) im Prinzip die Form eines Kreisringabschnitts hat.

4. Durchflussmengenmesser nach einem der vorhergehenden Ansprüche, **dadurch gekennzeichnet, dass** die beiden Ultraschallwandler (50a, 50b) am Anfang bzw. am Ende des Messkanals (41) in einem abgeschlossenen Sektor (44) des Messkammereinsatzes (40) angeordnet sind.

5. Durchflussmengenmesser nach einem der vorhergehenden Ansprüche, **dadurch gekennzeichnet, dass** drei Spiegelflächen (32a, 32b, 32c) über den Umfang des Messkapselgehäuses (30) verteilt angeordnet sind und der Messkammereinsatz (40) drei korrespondierend angeordnete Öffnungen (46a, 46b, 46c) hat.

6. Durchflussmengenmesser nach einem der vorhergehenden Ansprüche, **dadurch gekennzeichnet, dass** das Messkapselgehäuse (30) auf das Anschlussstück (10) aufschraubbar ist.

7. Durchflussmengenmesser nach einem der vorhergehenden Ansprüche, **dadurch gekennzeichnet, dass** das Messkapselgehäuse (30) und das Anschlussstück (10) aus Messing sind.

## Claims

1. Flow rate detector for determining the amount of a liquid flowing through a line, comprising:
a connecting piece (10) with an inlet connector (12) and an outlet connector (13) which can be connected to the line;
a measuring capsule (20) with a round measuring capsule housing (30) made from metal and a measuring channel (41), wherein the inlet of the measuring channel is connected to the inlet connector and the outlet of the measuring channel is connected to the outlet connector, so that the liquid volume to be measured flows through the measuring channel;
an ultrasonic measuring section (60) which extends through the measuring channel and has two ultrasonic transducers (50a, 50b) that are arranged at the beginning and the end of the measuring channel and send and/or receive ultrasonic signals into the ultrasonic measuring section;
deflecting mirrors arranged along the measuring channel that are inclined at an angle to each other in such manner that the ultrasonic signals emitted by the first ultrasonic transducer are reflected towards the second ultrasonic transducer via the deflecting mirrors and/or in the opposite direction back towards the first ultrasonic transducer;
**characterized in that**
a measuring chamber insert (40) made from a plastic that absorbs ultrasound is arranged coaxially inside the measuring capsule housing (30);
the measuring channel (41) is conformed inside the measuring chamber insert (40);
the outer wall (45) of the measuring chamber insert (40) has radial openings (46a, 46b, 46c);
flat reflecting surfaces (32a, 32b, 32c) are conformed on the inner wall (31) of the measuring capsule housing (30), wherein the flat reflecting surfaces close the radial openings of the measuring chamber insert.

2. Flow rate detector according to Claim 1, **characterized in that** the reflecting surfaces (32a, 32b, 32c) are constructed integrally with the measuring capsule housing (30).

3. Flow rate detector according to Claim 1 or Claim 2, **characterized in that** in principle the measuring channel (41) is in the shape of a circular ring segment.

4. Flow rate detector according to any one of the preceding claims, **characterized in that** the two ultrasonic transducers (50a, 50b) are arranged at the beginning and the end, respectively, of the measuring channel (41), in a closed sector (44) of the measuring chamber insert (40).

5. Flow rate detector according to any one of the preceding claims, **characterized in that** three reflecting surfaces (32a, 32b, 32c) are arranged around the circumference of the measuring capsule housing (30), and the measuring chamber insert (40) has three correspondingly arranged openings (46a, 46b, 46c).

6. Flow rate detector according to any one of the preceding claims, **characterized in that** the measuring capsule housing (30) can be screwed onto the connecting piece (10) .

7. Flow rate detector according to any one of the preceding claims, **characterized in that** the measuring capsule housing (30) and the connecting piece (10) are made from brass.

## Revendications

1. Débitmètre, destiné à déterminer la quantité d'un liquide qui coule à travers une conduite, comprenant :
une pièce de raccord (10), pourvue d'une tubulure d'entrée (12) et d'une tubulure de sortie (13), susceptibles d'être connectées sur la conduite ;
une capsule de mesure (20), pourvue d'un corps (30) de capsule de mesure métallique rond et d'un canal de mesure (41), l'entrée du canal de mesure étant connectée sur la tubulure d'entrée et la sortie du canal de mesure étant connectée sur la sortie de la tubulure de sortie, de telle sorte que le volume de liquide qui doit être mesuré circule à travers le canal de mesure ;
un trajet de mesure (60) par ultrasons s'écoulant à travers le canal de mesure, pourvu de deux transducteurs ultrasoniques (50a, 50b), qui sont placés au début et à la fin du canal de mesure et qui envoient et / ou réceptionnent des signaux ultrasoniques dans le trajet de mesure ultrasonique ;
des miroirs de renvoi placés le long du canal de mesure, qui sont inclinés en oblique les uns vers les autres, de telle sorte que les signaux ultrasoniques émis par le premier transducteur ultrasonique soient réfléchis par l'intermédiaire des miroirs de renvoi vers le deuxième transducteur ultrasonique et / ou à contresens en retour vers le premier transducteur ultrasonique ;
**caractérisé en ce que**
dans le corps (30) de capsule de mesure est placé de manière coaxiale un insert (40) de chambre de mesure en une matière plastique qui absorbe les ultrasons ;
le canal de mesure (41) est constitué dans l'insert (40) de chambre de mesure ;
la paroi extérieure (45) de l'insert (40) de chambre de mesure a des orifices (46a, 46b, 46c) radiaux ;
sur la paroi intérieure (31) du corps (30) de capsule de mesure sont constituées des surfaces réfléchissantes (32a, 32b, 32c) planes, les surfaces réfléchissantes fermant les orifices radiaux de l'insert de chambre de mesure.

2. Débitmètre selon la revendication 1, **caractérisé en ce que** les surfaces réfléchissantes (32a, 32b, 32c) sont constituées en monobloc avec le corps (30) de capsule de mesure.

3. Débitmètre selon la revendication 1 ou la revendication 2, **caractérisé en ce que** le canal de mesure (41) a en principe la forme d'un segment de bague circulaire.

4. Débitmètre selon l'une quelconque des revendications précédentes, **caractérisé en ce que** les deux transducteurs ultrasoniques (50a, 50b) sont placés au début ou à la fin du canal de mesure (41) dans un secteur (44) fermé de l'insert (40) de chambre de mesure.

5. Débitmètre selon l'une quelconque des revendications précédentes, **caractérisé en ce que** trois surfaces réfléchissantes (32a, 32b, 32c) sont placées en distribution sur la périphérie du corps (30) de capsule de mesure et **en ce que** l'insert (40) de chambre de mesure a trois orifices (46a, 46b, 46c) placés en correspondance.

6. Débitmètre selon l'une quelconque des revendications précédentes, **caractérisé en ce que** le corps (30) de capsule de mesure peut se visser sur la pièce de raccord (10).

7. Débitmètre selon l'une quelconque des revendications précédentes, **caractérisé en ce que** le corps (30) de capsule de mesure et la pièce de raccord (10) sont en laiton.
